# EUROPEAN PATENT APPLICATION

(11) **EP 4 628 749 A1**
(43) Date of publication of application: **08.10.2025**
(21) Application number: 25167244.0
(22) Date of filing: 31.03.2025
(51) Int. Cl.: F16F 15/06, F16F 15/127

(54) **VIBRATION ABSORPTION APPARATUS FOR HEAD-UP DISPLAY DRIVING MODULE**

(30) Priority: 02.04.2024 KR 20240044630
(71) Applicant: Hyundai Mobis Co., Ltd., Gangnam-gu Seoul (KR)
(72) Inventor: KIM, Byung Ki, 16931 Yongin-si, Gyeonggi-do (KR)
(74) Representative: Jung, Minkyu

(57) **Abstract**

A vibration absorption apparatus for a head-up display driving module is provided. The vibration absorption apparatus includes: a housing; a motor disposed on an end portion of the housing via a motor mount; a lead screw abutting against a central area of the housing, the lead screw extending from and coupled to the axis of rotation of the motor; a lead screw bracket to fix the lead screw; a link to lift or lower the lead screw based on a driving force of the motor; a flexible coupling to connect the axis of rotation of the motor and the lead screw; heterogeneous spring members coupled to the flexible coupling to isolate torsional vibrations of the flexible coupling; and a cantilever type dynamic vibration absorber disposed between the motor mount and the lead screw bracket, the cantilever type dynamic vibration absorber to absorb and damp vibration produced by the motor.

## Description

### CROSS-REFERENCE TO RELATED APPLICATION

The present application claims the benefit under 35 USC § 119(a) of Korean Patent Application No. 10-2024-0044630, filed on April 2, 2024, in the Korean Intellectual Property Office, the entire disclosure of which is incorporated herein by reference for all purposes.

### BACKGROUND

### 1. Field

The present disclosure relates to a vibration absorption apparatus for a head-up display driving module.

### 2. Description of the Related Art

The content described below merely provides background information related to the present disclosure and does not constitute the related art.

A head-up display is a device that displays an image showing vehicle speed, remaining fuel, navigation information, etc. on a windshield that forms a front window of a vehicle. The head-up display is generally configured to present display information projected from a picture generation unit onto a windshield.

The head-up display rotates an aspheric mirror using a motor. As the revolutions per minute (RPM) of the motor increases, the vibration of the motor, i.e., the acceleration of the motor, increases. A conventional head-up display discloses the technology of suppressing the vibration of the motor by using a dynamic vibration absorber made of metal such as brass. However, metal dynamic vibration absorbers such as brass ones are more massive than such members as the motor and a motor mount for fixing the motor. This can increase the manufacturing cost of a head-up display driving module and increase the total weight of the head-up display driving module.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

An embodiment of the present disclosure provides a vibration absorbing apparatus for a head-up display driving module, that is capable of blocking vibrational transmission to a lead screw bracket by using a cantilever type dynamic vibration absorber.

An embodiment of the present disclosure provides a vibration absorbing apparatus for a head-up display driving module, that is capable of dealing with low frequency vibrations by using a cantilever type dynamic vibration absorber.

An embodiment of the present disclosure provides a vibration absorbing apparatus for a head-up display driving module, that is capable of isolating torsional vibrations transmitted through a flexible coupling by using heterogeneous spring members.

In a general aspect of the disclosure, a vibration absorption apparatus for a head-up display driving module, includes: a housing; a motor disposed on an end portion of the housing via a motor mount; a lead screw configured to abut against a central area of the housing, the lead screw extending from and coupled to the axis of rotation of the motor; a lead screw bracket configured to fix the lead screw; a link configured to lift or lower the lead screw based on a driving force of the motor; a flexible coupling configured to connect the axis of rotation of the motor and the lead screw; heterogeneous spring members coupled to the flexible coupling to isolate torsional vibrations of the flexible coupling; and a cantilever type dynamic vibration absorber disposed between the motor mount and the lead screw bracket, the cantilever type dynamic vibration absorber configured to absorb the vibration of the motor and damp vibrations produced by the motor.

The heterogeneous spring members may include: a first spring member having elasticity based on being twisted clockwise with respect to the axis of rotation of the flexible coupling; and a second spring member having elasticity based on being twisted counterclockwise with respect to the axis of rotation of the flexible coupling, wherein the second spring member may be disposed on an outer side of the first spring member to cover the first spring member.

The flexible coupling may include two hubs coupled to opposite sides of a spacer, wherein each of the two hubs may include two fixing holes formed toward the center and are configured to oppose each other on the outer diameter of the hubs.

The heterogeneous spring members may each be fitted and attached to the two fixing holes formed in each of the two different hubs, via two arms formed on an inner side.

The heterogeneous spring members may each be fitted and attached to the fixing holes formed in each of the different hubs to maintain respective preloads applied in clockwise and counterclockwise directions.

The cantilever type dynamic vibration absorber may include: a male thread part configured to penetrate opposite ends of the lead screw bracket and attach to the lead screw bracket via a bolt; a cantilever type male thread part configured to penetrate opposite ends of the motor mount, and attach to the motor mount via a bolt; a damping member disposed between the male thread part and the cantilever type male thread part to damp vibrations transmitted between the male thread part and the cantilever type male thread part; and an elastic member configured to overlap the damping member and be compressed to have a predetermined tensile force.

The cantilever type dynamic vibration absorber may be configured to physically separate the lead screw bracket and the motor mount from each other.

The cantilever type male thread part may be configured to be adjusted to a preset mass and a preset length so that the natural frequency of the motor and a target frequency of the cantilever type dynamic vibration absorber are equal.

The cantilever type dynamic vibration absorber may be disposed such that the axis of rotation of the motor and the axis of rotation of the lead screw coincide with each other.

The cantilever type dynamic vibration absorber may be further configured to: adjust the length of the damping member based on the natural frequency of the motor; and adjust the tensile force of the elastic member.

In another general aspect of the disclosure, a vibration absorption apparatus for a head-up display driver, includes: a housing; a motor disposed at an end of the housing; a lead screw coupled to the motor at an axis of rotation of the motor, and extending from the motor; a lead screw bracket configured to position the lead screw; a link connected to the lead screw and including an aspheric mirror; a controller configured to control the motor to rotate the aspheric mirror by lifting or lowering the link; a flexible coupling connected to the lead screw at the axis of rotation of the motor; one or more heterogeneous spring members coupled to the flexible coupling, and configured to isolate torsional vibrations of the flexible coupling; and a cantilever type dynamic vibration absorber disposed between the motor mount and the lead screw bracket, the cantilever type dynamic vibration absorber configured to absorb and damp vibration produced by the motor.

The one or more heterogeneous spring members may include: a first spring member having elasticity based on being twisted clockwise with respect to the axis of rotation of the flexible coupling; and a second spring member having elasticity based on being twisted counterclockwise with respect to the axis of rotation of the flexible coupling, wherein the second spring member may be disposed on an outer side of the first spring member to cover the first spring member.

The flexible coupling may include a least two hubs coupled to opposite sides of a spacer, wherein each of the at least two hubs may include two fixing holes formed toward the center and are configured to oppose each other on the outer diameter of the hubs.

The cantilever type dynamic vibration absorber may include: a male thread part configured to penetrate opposite ends of the lead screw bracket and attach to the lead screw bracket via a bolt; a cantilever type male thread part configured to penetrate opposite ends of the motor mount, and attach to the motor mount via a bolt; a damping member disposed between the male thread part and the cantilever type male thread part to damp vibrations transmitted between the male thread part and the cantilever type male thread part; and an elastic member configured to overlap the damping member and be compressed to have a predetermined tensile force.

The problems to be solved by the present disclosure are not limited to the above-mentioned ones, and other problems not mentioned herein may be clearly understood by those skilled in the art from the description below.

According to an embodiment of the present disclosure, a vibration absorbing apparatus for a head-up display driving module is capable of blocking vibrational transmission to a lead screw bracket by using a cantilever type dynamic vibration absorber.

According to an embodiment of the present disclosure, a vibration absorbing apparatus for a head-up display driving module is capable of dealing with low frequency vibrations by using a cantilever type dynamic vibration absorber.

According to an embodiment of the present disclosure, a vibration absorbing apparatus for a head-up display driving module is capable of isolating torsional vibrations transmitted through a flexible coupling by using heterogeneous spring members.

### BRIEF DESCRIPTION OF THE DRAWINGS

Fig. 1 is a view showing a configuration of a vibration absorption apparatus for a head-up display driving module according to an embodiment of the present disclosure.
Fig. 2 is an exploded perspective view showing a configuration of a vibration absorption apparatus for a head-up display driving module according to an embodiment of the present disclosure.
Fig. 3 is a cross-sectional view taken along the line A-A of FIG. 1.
Fig. 4 is an exploded perspective view showing in detail a flexible coupling and heterogeneous spring members according to an embodiment of the present disclosure.

### DETAILED DESCRIPTION

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof.

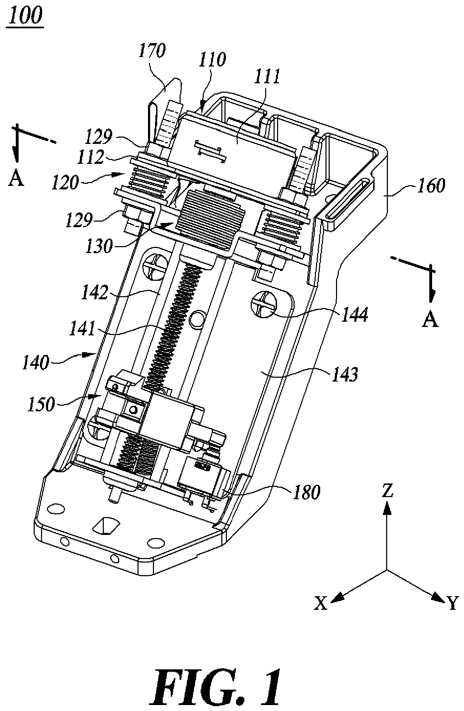

Fig. 1 is a view showing a configuration of a vibration absorption apparatus for a head-up display driving module according to an embodiment of the present disclosure.

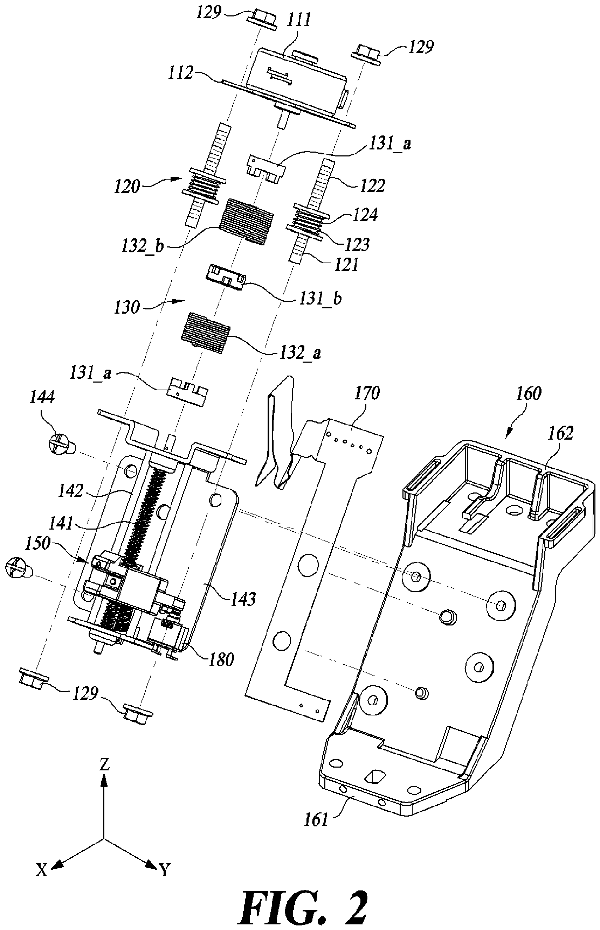

Fig. 2 is an exploded perspective view showing a configuration of a vibration absorption apparatus for a head-up display driving module according to an embodiment of the present disclosure.

Referring to Fig. 1 and Fig. 2, a head-up display driving module 100 according to an embodiment of the present disclosure includes some or all of a power generation part 110, a cantilever type dynamic vibration absorber 120, heterogeneous spring members 130, a power transmission part 140, a link 150, and a housing 160.

The head-up display driving module 100 rotates an aspheric mirror 180 by lifting and lowering the link 150 based on the torque of a motor 111. That is, a controller (not shown) may be to control the motor 111 to rotate the aspheric mirror 180 by lifting or lowering the link 150;

The power generation part 110 includes the motor 111 and a motor mount 112.

The motor 111 is disposed on one side of the housing 160. The motor 111 may be formed at the center with respect to the length of the housing 160.

A lead screw 141 extends from and is attached to the axis of rotation of the motor 111 by a flexible coupling 131_a and 131_b. The lead screw 141 is configured to rotate by being connected to the axis of rotation of the motor 111 in the direction it extends, and may be formed integrally with the power generation part 110 or formed as a detachable structure that can be assembled/dissembled.

The flexible coupling 131_a and 131_b may partially damp vibrations produced from the motor 111.

The flexible coupling 131_a and 131_b may compensate for an eccentricity between the axis of rotation of the motor 111 and the axis of rotation of the lead screw 141.

The flexible coupling 131_a and 131_b has hubs 131_a coupled to opposite sides of a spacer 131_b. Thus, the axis of rotation of the motor 111 may be fitted and attached to the hub 131_a coupled to one side of the flexible coupling 131_a and 131_b, and the lead screw 141 may be fitted and attached to the hub 131_a coupled to the other side of the flexible coupling 131_a and 131_b. Here, even if the axis of rotation of the motor 111 and the axis of rotation of the lead screw 141 do not coincide with each other, the eccentricity between the axes can be compensated for by using the spacer 131_b.

The flexible coupling 131_a and 131_b according to an embodiment of the present disclosure may be an Oldham coupling, for example. Here, the Oldham coupling is used as a coupling for compensating for the eccentricity between the axes coupled to the two sides. However, the type of the flexible coupling 131_a and 131_b is not limited to this.

The motor mount 112 allows the motor 111 to be fixed into the housing 160. The motor mount 112 has a shape that partially projects in the y direction and (-)y direction in Fig. 1 with respect to the axis of rotation of the motor 111. However, this is merely an example, and the shape of the motor mount 112 is not limited to this example. The motor mount 112 may be formed in such a manner that a plurality of portions projects radially from the axis of rotation of the motor 111.

The motor mount 112 includes a plurality of holes so that part of the cantilever type dynamic vibration absorber 120 to be described later is fitted and attached to them.

The cantilever type dynamic vibration absorber 120 penetrates and is attached to the motor mount 112 and the lead screw bracket 143 at the same time.

Vibrations produced from the motor 111 are transmitted to the housing 160 via the motor mount 112 and the lead screw 141 in sequence. Thus, the head-up display driving module 100 according to an embodiment of the present disclosure may damp vibrations transmitted between the motor mount 112 and the lead screw bracket 143 by using the cantilever type dynamic vibration absorber 120.

The cantilever type dynamic vibration absorber 120 includes a male thread part 121, a cantilever type male thread part 122, a damping member 124, and an elastic member 123.

The male thread part 121 is fitted and attached to a through-hole (not shown) formed in the lead screw bracket 143. The male thread part 121 is secured to the lead screw bracket 143 with a bolt 129. By adjusting the axial length of the thread, the cantilever type male thread part 122 is cantilevered. Here, the length of the thread may be determined based on the amplitude, frequency, etc. of vibrations produced from the motor 111.

The length of the cantilever type male thread part 122 may be adjusted so that the natural frequency of the motor 111 and the natural frequency of the cantilever type dynamic vibration absorber 120 coincide with each other.

The male tread part 121 and the cantilever type male thread part 122 are disposed in opposite directions on the same axis with respect to the damping member 124. The male tread part 121 and the cantilever type male thread part 122 may be bonded to opposite sides of the damping member 124 by using an adhesive.

When the male tread part 121 and the cantilever type male thread part 122 are secured to both ends of the damping member 124, the elastic member 123 in the extended state overlaps the damping member 124. The elastic member 123 is disposed in such a manner as to receive the damping member 124 within it.

The heterogeneous spring members 130 have resistance when twisted in the direction in which the flexible coupling 131_a and 131_b rotates. The heterogeneous spring members 130 may be torsion springs having resistance to torsion.

The heterogeneous spring members 130 include a first spring member 132_a and a second spring member 132_b.

The first spring member 132_a has elasticity when twisted clockwise with respect to the axis of rotation of the flexible coupling 131_a and 131_b.

The second spring member 132_b has elasticity when twisted counterclockwise with respect to the rotational axis of the flexible coupling 131_a and 131_b. The second spring member 132b is disposed to receive the first spring member 132a. In this way, the first spring member 132_a and the second spring member 132_b are set to have the same preload by adjusting their design specifications, regardless of the difference in inner diameter in the layout. That is, although the first spring member 132_a and the second spring member 132_b have different inner diameters due to structural reasons, they have the same degree of elasticity when twisted clockwise and counterclockwise with respect to the flexible coupling 131_a and 131_b.

As a method of setting the first spring member 132_a and the second spring member 132_b to have the same preload, the number of coils of the first spring member 132_a with a smaller inner diameter may be increased to have the same preload as the second spring member 132_a with a larger inner diameter. Also, the distance between each coil of the first spring member 132_a with a smaller inner diameter may be decreased so as to have the same preload as the second spring member 132_b with a larger inner diameter. Moreover, the coils of the first spring member 132_a with a smaller inner diameter may be set to have a large cross-sectional area so as to have the same preload as the second spring member 132_b with a larger inner diameter. However, these are merely one or more embodiments, and the method of setting the first spring members 132_a and the second spring member 132_b to have the same preload is not limited to them. The first spring member 132_a and the second spring member 132_b are secured to the flexible coupling 131_a and 131_b by being fitted and attached to the holes formed in the hubs 131_a of the flexible coupling 131_a and the 131_b.

The power transmission part 140 includes a lead screw 141, a guide shaft 142, and a lead screw bracket 143.

The lead screw bracket 143 abuts against and is attached to a main body of the housing 160. The lead screw bracket 143 is fixed to the housing 160 by using tapping screws 144.

The lead screw bracket 143 may be bent heightwise with respect to a surface that abuts against the housing 160 to secure the lead screw 141. Part of the bent portion of the lead screw bracket 143 may be disposed in parallel to the motor mount 112.

The lead screw bracket 143 rotatably receives longitudinal ends of the lead screw 141. The lead screw 141 may be fixed onto the lead screw bracket 143 by using a bearing.

The guide shaft 142 is formed on the lead screw bracket 143, spaced apart from and parallel to the lead screw 141. The guide shaft 142 is disposed on either side of the lead screw 141. The guide shaft 142 is disposed in such a manner as to penetrate part of the link 150 to be described later. Thus, when the link 150 is lifted and lowered along the lead screw 141, the guide shaft 142 may guide the link 150 along the lifting and lowering range so that the link 150 does not rotate along the thread of the lead screw 141.

The link 150 includes a body (not shown), a slot (not shown), and a clip (not shown).

The link 150 is attached to the lead screw 141 so as to be lifted and lowered along the lead screw 141. The link 150 includes a hole (not shown) that penetrates the body, with a thread formed on the inside.

The slot of the link 150 extends heightwise from the body and has a U shape whose one side is open. The clip is formed in a "U" shape corresponding to the open side of the slot and is attached to the slot by a snap-fit. Here, the clip is configured to be detachable from the slot.

The housing 160 includes an upper housing 161 and a lower housing 162.

The upper housing 161 and the lower housing 162 are slanted diagonally with respect to the body. For example, if the upper housing 161 is slanted downward with respect to the body, the lower housing 162 may be slanted upward with respect to the body. However, this is merely an example, and the shape of the housing 160 is not limited to this example.

The housing 160 includes a plurality of bosses (not shown) and holes (not shown) for fixing the lead screw bracket 143 in place. The position of the lead screw bracket 143 is determined by the plurality of bosses when assembled to the housing 160, and the tapping screws 144 are coupled to the holes.

A cable slit is attached between the housing 160 and the lead screw bracket 143. Here, the cable slit refers to a conductive wire connected to the motor 111, i.e., a flexible cable 170. The flexible cable 170 may be installed at both sides of the motor 111, i.e., at the left and right.

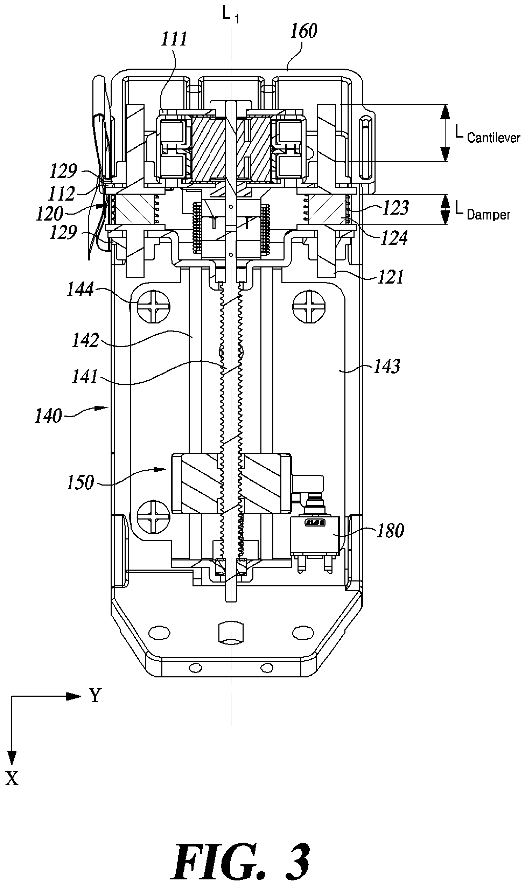

Fig. 3 is a cross-sectional view taken along the line A-A of FIG. 1.

Referring to Fig. 1 through Fig. 3, the cantilever type dynamic vibration absorber 120 may be disposed in parallel to the rotational axis L1 of the lead screw 141.

While the male thread part 121 of the cantilever type dynamic vibration absorber 120 has a predetermined length so as to be coupled to the bolt 129, the cantilever type male thread part 122 has a preset length Lcantilever in the (-)x-axis direction, for example, in order to damp vibrations produced from the motor being driven. The preset length of the cantilever type male thread part 122 refers to the length from a fixed end to a free end, and refers to the length from an outer side of the bolt 129 to a distal end of the cantilever male thread part 122.

The damping member 124 is formed in such a manner that the cantilever type male thread part 122 and the male thread part 121 are physically separated from each other. Vibrations produced from the motor 111 being driven are transmitted to the cantilever type dynamic vibration absorber 120 via the motor mount 112. Having received vibrations via the motor mount 112, the cantilever type dynamic vibration absorber 120 may damp the vibrations by using the cantilever type male thread part 122. Also, the cantilever type dynamic vibration absorber 120 may minimize residual vibrations transmitted to the lead screw bracket 143 by using the damping member 124 and the elastic member 123. The damping member 124 has a predetermined length Ldamper in the x-axis direction, for example. Here, the damping member 124 may be formed based on a rubber material. In other embodiments, the damping member 124 may be formed based on a viscoelastic gelatinous material.

The free length of the elastic member 123 is greater than the length Ldamper of the damping member 124. Thus, the elastic member 123 may be disposed between the male thread part 121 and the cantilever type male thread part 122 while maintaining its tensile force. Here, the elastic member 123 may be a tension spring that has a tensile force in an axial direction.

In the head-up display driving module 100 using the cantilever type dynamic vibration absorber 120 according to an embodiment of the present disclosure, the frequency ratio is calculated as a value of or more, for example. This means that the frequency of the damping member 124 is lower than the frequency of the motor 111. Here, the frequency ratio is a value obtained by dividing the frequency of the motor 111 by the frequency of the cantilever type dynamic vibration absorber 120. Accordingly, the vibration transmissibility (TR) of the head-up display driving module 100 using the cantilever type dynamic vibration absorber 120 is calculated as a value lower than 1.0, for example. Here, the vibration transmissibility is the ratio of the vibration transmitted to the lead screw bracket 143 to the vibration produced from the motor 111. For example, a vibration transmissibility of 1.0 means that the vibration produced from the motor 111 is entirely transmitted to the lead screw bracket 143. That is, the head-up display driving module 100 is able to effectively damp vibrations produced from the motor 111 by using the cantilever type dynamic vibration absorber 120.

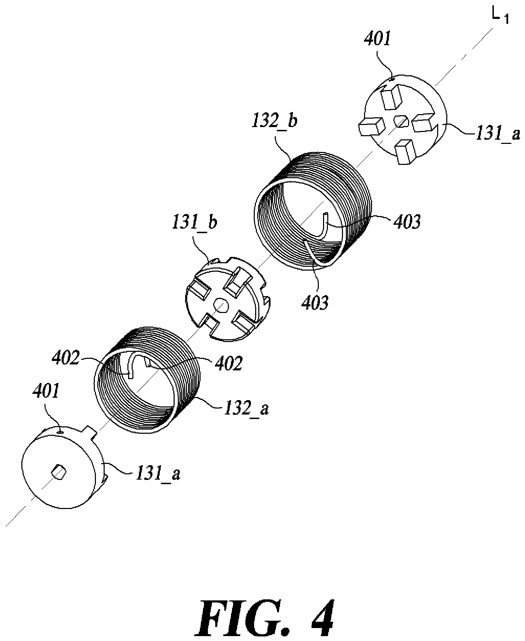

Fig. 4 is an exploded perspective view showing in detail a flexible coupling and heterogeneous spring members according to an embodiment of the present disclosure.

Referring to Fig. 1 through Fig. 4, the first spring member 132_a and second spring member 132_b according to an embodiment of the present disclosure include arms that are fitted and attached to the flexible coupling 131_a and 131_b.

The first spring member 132_a includes first arms 402. The second spring member 132_b includes second arms 403.

The first arms 402 and the second arms 403 are formed by inwardly bending the ends of the coil of the first spring member 132_a and the second spring member 132_b.

The first arms 402 may be bent toward the rotational axis L1 of the lead screw bracket 143 passing through the first spring member 132_a. Also, the second arms 403 may be bent toward the rotational axis L1 of the lead screw bracket 143 passing through the second spring member 132_b.

The flexible coupling 131_a and 131_b has two hubs 131_a coupled to opposite sides of the spacer 131b. Although not shown in Fig. 4, the flexible coupling 131_a and 131_b may include a fixing pin (not shown) for generating a fixing force between the two hubs 131_a and the spacer 131_b.

The two hubs 131_a each include two fixing holes 401.

The two fixing holes 401 are formed opposing each other on the outer diameter of the hubs 131_a.

When an imaginary line is formed by connecting the two fixing holes 401 formed in each of the two hubs 131_a, the imaginary lines formed respectively in the two hubs 131_a do not coincide with each other but intersect each other with respect to the rotational axis L1. That is, when the first arms 402 are fitted and attached to one of the two fixing holes 401 formed in each of the two hubs 131_a, a clockwise preload is applied to the first spring member 132_a. Also, when the second arms 403 are fitted and attached to one of the two fixing holes 401 formed in each of the two hubs 131_a, a counterclockwise preload is applied to the second spring member 132_b.

Accordingly, the heterogeneous spring members 130 have resistance against clockwise and counterclockwise torsions transmitted to the flexible coupling 131_a and 131_b. Also, the heterogeneous spring members 130 are capable of damping vibrations applied to the flexible coupling 131_a and 131_b.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the present embodiments is not limited by the illustrations. Accordingly, one of ordinary skill would understand that the scope of the claimed invention is not to be limited by the above explicitly described embodiments but by the claims and equivalents thereof.

## Claims

1. A vibration absorption apparatus for a head-up display driving module, the vibration absorption apparatus comprising:
a housing;
a motor disposed on an end portion of the housing via a motor mount;
a lead screw configured to abut against a central area of the housing, the lead screw extending from and coupled to the axis of rotation of the motor;
a lead screw bracket configured to fix the lead screw;
a link configured to lift or lower the lead screw based on a driving force of the motor;
a flexible coupling configured to connect the axis of rotation of the motor and the lead screw;
heterogeneous spring members coupled to the flexible coupling to isolate torsional vibrations of the flexible coupling; and
a cantilever type dynamic vibration absorber disposed between the motor mount and the lead screw bracket, the cantilever type dynamic vibration absorber configured to absorb the vibration of the motor and damp vibrations produced by the motor.

2. The vibration absorption apparatus of claim 1, wherein the heterogeneous spring members include:
a first spring member having elasticity based on being twisted clockwise with respect to the axis of rotation of the flexible coupling; and
a second spring member having elasticity based on being twisted counterclockwise with respect to the axis of rotation of the flexible coupling, and
wherein the second spring member is disposed on an outer side of the first spring member to cover the first spring member.

3. The vibration absorption apparatus of claim 1 or 2, wherein the flexible coupling comprises two hubs coupled to opposite sides of a spacer, and
wherein each of the two hubs includes two fixing holes formed toward the center and are configured to oppose each other on the outer diameter of the hubs.

4. The vibration absorption apparatus of claim 3, wherein the heterogeneous spring members are each fitted and attached to the two fixing holes formed in each of the two different hubs, via two arms formed on an inner side.

5. The vibration absorption apparatus of claim 3 or 4, wherein the heterogeneous spring members are each fitted and attached to the fixing holes formed in each of the different hubs to maintain respective preloads applied in clockwise and counterclockwise directions.

6. The vibration absorption apparatus of any one of claims 1 to 5, wherein the cantilever type dynamic vibration absorber comprises:
a male thread part configured to penetrate opposite ends of the lead screw bracket and attach to the lead screw bracket via a bolt;
a cantilever type male thread part configured to penetrate opposite ends of the motor mount, and attach to the motor mount via a bolt;
a damping member disposed between the male thread part and the cantilever type male thread part to damp vibrations transmitted between the male thread part and the cantilever type male thread part; and
an elastic member configured to overlap the damping member and be compressed to have a predetermined tensile force.

7. The vibration absorption apparatus of any one of claims 1 to 6, wherein the cantilever type dynamic vibration absorber is configured to physically separate the lead screw bracket and the motor mount from each other.

8. The vibration absorption apparatus of claim 6 or 7, wherein the cantilever type male thread part is configured to be adjusted to a preset mass and a preset length so that the natural frequency of the motor and a target frequency of the cantilever type dynamic vibration absorber are equal.

9. The vibration absorption apparatus of any one of claims 1 to 8, wherein the cantilever type dynamic vibration absorber is disposed such that the axis of rotation of the motor and the axis of rotation of the lead screw coincide with each other.

10. The vibration absorption apparatus of any one of claims 6 to 9, wherein the cantilever type dynamic vibration absorber is further configured to:
adjust the length of the damping member based on the natural frequency of the motor; and
adjust the tensile force of the elastic member.

11. A vibration absorption apparatus for a head-up display driver, the apparatus comprising:
a housing;
a motor disposed at an end of the housing;
a lead screw coupled to the motor at an axis of rotation of the motor, and extending from the motor;
a lead screw bracket configured to position the lead screw;
a link connected to the lead screw and including an aspheric mirror;
a controller configured to control the motor to rotate the aspheric mirror by lifting or lowering the link;
a flexible coupling connected to the lead screw at the axis of rotation of the motor;
one or more heterogeneous spring members coupled to the flexible coupling, and configured to isolate torsional vibrations of the flexible coupling; and
a cantilever type dynamic vibration absorber disposed between the motor mount and the lead screw bracket, the cantilever type dynamic vibration absorber configured to absorb and damp vibration produced by the motor.

12. The apparatus of claim 11, wherein the one or more heterogeneous spring members include:
a first spring member having elasticity based on being twisted clockwise with respect to the axis of rotation of the flexible coupling; and
a second spring member having elasticity based on being twisted counterclockwise with respect to the axis of rotation of the flexible coupling, and
wherein the second spring member is disposed on an outer side of the first spring member to cover the first spring member.

13. The apparatus of claim 11 or 12, wherein the flexible coupling comprises a least two hubs coupled to opposite sides of a spacer, and
wherein each of the at least two hubs includes two fixing holes formed toward the center and are configured to oppose each other on the outer diameter of the hubs.

14. The apparatus of any one of claims 11 to 13, wherein the cantilever type dynamic vibration absorber comprises:
a male thread part configured to penetrate opposite ends of the lead screw bracket and attach to the lead screw bracket via a bolt;
a cantilever type male thread part configured to penetrate opposite ends of the motor mount, and attach to the motor mount via a bolt;
a damping member disposed between the male thread part and the cantilever type male thread part to damp vibrations transmitted between the male thread part and the cantilever type male thread part; and
an elastic member configured to overlap the damping member and be compressed to have a predetermined tensile force.
